# EUROPEAN PATENT SPECIFICATION

(11) **EP 3 382 939 B1**
(45) Date of publication and mention of the grant of the patent: **23.10.2019**
(21) Application number: 18153405.8
(22) Date of filing: 09.04.2014
(51) Int. Cl.: H04L 12/24

(54) **TROUBLESHOOTING METHOD, APPARATUS, AND SYSTEM BASED ON NETWORK FUNCTION VIRTUALIZATION**
FEHLERBEHEBUNGSVERFAHREN, VORRICHTUNG UND SYSTEM AUF DER BASIS VON NETZWERKFUNKTIONSVIRTUALISIERUNG
PROCÉDÉ DE DÉPANNAGE, APPAREIL ET SYSTÈME BASÉ SUR LA VIRTUALISATION DE FONCTIONS SUR RÉSEAU

(43) Date of publication of application: 03.10.2018
(62) Divisional of application: 14888774.8
(73) Proprietor: Huawei Technologies Co., Ltd., Longgang District Shenzhen Guangdong 518129 (CN)
(72) Inventor: LI, Long, Shenzhen, Guangdong 518129 (CN); GONG, Xuewen, Shenzhen, Guangdong 518129 (CN); GONG, Xiaodong, Shenzhen, Guangdong 518129 (CN); YIN, Jie, Shenzhen, Guangdong 518129 (CN); PENG, Zhan, Shenzhen, Guangdong 518129 (CN)
(74) Representative: Isarpatent

(56) References cited:
- WO-A1-2013/055538
- US-A1- 2010 107 015
- US-A1- 2013 219 043
- GUILHERME KOSLOVSKI ET AL: "Reliability Support in Virtual Infrastructures", CLOUD COMPUTING TECHNOLOGY AND SCIENCE (CLOUDCOM), 2010 IEEE SECOND INTERNATIONAL CONFERENCE ON, IEEE, 30 November 2010 (2010-11-30), pages 49-58, XP031900236, DOI: 10.1109/CLOUDCOM.2010.23 ISBN: 978-1-4244-9405-7

## Description

### TECHNICAL FIELD

Embodiments of the present invention relate to the field of communications technologies, and in particular, to a troubleshooting method, apparatus, and system based on network function virtualization.

### BACKGROUND

In an application scenario of a network function virtualization (Network Function Virtualization, NFV) system, conventional architectures of a network and a network node change greatly. In a new network architecture, a conventional physical telecommunications node evolves into a virtual node in a virtual machine; and function nodes such as a network function virtualization infrastructure (NFV Infrastructure, NFVI), a virtualized infrastructure manager (Virtualized Infrastructure Manager, VIM), a virtualized network function (Virtualized Network Function, VNF), a virtualized network function manager (VNF Manager, VNFM), and a network function virtualization orchestrator (NFV Orchestrator, NFVO) are added to a network architecture defined by a standard of the NFV system.

An NFVI virtualization layer is introduced into the NFV system, and application VNFs run in the NFVI. According to layered design, the VNF and the NFVI separately sense and process different types of faults, for example, the VNF can sense a service fault, and the NFVI can sense a hardware fault. When a fault occurs in the NFVI, multiple VNFs on an upper layer may be affected. Therefore, when a fault occurs in the NFV system, fault correlation analyses need to be performed on the VNF and the NFVI, and a proper fault recovery operation needs to be performed according to results of the fault correlation analyses.

An NFVO function object added to the NFV system is responsible for managing a life cycle of a network service (Network Service), and managing global scheduling of resources such as the VNF and the NFVI. Therefore, when a fault occurs in the VNF or the NFVI, availability of a Network Service service may be affected. In this case, the Orchestrator needs to consider how to perform a fault correlation analysis on the Network Service, the VNF, and the NFVI, and how to perform a fault correlation analysis on multiple VNFM instances.

In the existing NFV system, the fault correlation analysis performed on the Network Service, the VNF, and the NFVI and the fault correlation analysis performed on the multiple VNFM instances mainly rely on an element management system (Element Management System, EMS) on an operator side to report fault related information. If a fault occurs in the EMS or a message is delayed, troubleshooting time is caused to be excessively long, and troubleshooting efficiency is reduced, which cannot meet a requirement of a user for troubleshooting in real time.

US 2013/ 0219043 A1 discusses a method and apparatus for dynamically migrating a virtual desktop (VD) user from a first data center (DC) to a second DC in response to a determination made using DC management information and communications network management information that a user quality of experience (QoE) is deficient.

WO 2013/055538 A1 provides embodiments for providing reliability and security within a cloud environment.

### SUMMARY

The present invention provides a troubleshooting method, apparatus, and system based on network function virtualization, which can resolve a problem of low troubleshooting efficiency in the prior art, thereby meeting a requirement of a user for troubleshooting in real time. This is achieved by the features of the independent claims.

According to a first aspect, the present invention provides a troubleshooting method based on network function virtualization, including:
obtaining, by a network function virtualization orchestrator, NFVO, node, fault information of at least one virtualized network function, VNF, node that provides a virtualized network service and fault information of at least one NFVI node; and
performing, by the NFVO node, a fault correlation analysis on the virtualized network service, the at least one VNF node, and the at least one NFVI node according to the fault information of the at least one VNF node and the fault information of the at least one NFVI node.

With reference to the first aspect, in a first possible implementation manner:
the obtaining, by a NFVO node, fault information of at least one VNF node that provides a virtualized network service and fault information of at least one NFVI node includes:
obtaining, from a virtualized network function manager, VNFM, node by the NFVO node, the fault information of the at least one VNF node, and obtaining, from a VIM node, the fault information of the at least one NFVI node.

According to a second aspect, the present invention provides a troubleshooting method based on network function virtualization, including:
obtaining, by a network function virtualization orchestrator, NFVO, node , fault information of at least one virtualized network function manager, VNFM, node that provides a virtualized network service and fault information of at least one network function virtualization infrastructure, NFVI, node; and
performing, by the NFVO node, a fault correlation analysis on the virtualized network service, the at least one VNFM node, and the at least one NFVI node according to the fault information of the at least one VNFM node and the fault information of the at least one NFVI node.

With reference to the second aspect, in a first possible implementation manner:
the obtaining, by a NFVO node, fault information of at least one VNFM node that provides a virtualized network service and fault information of at least one NFVI node includes:
receiving, by the NFVO node, a message sent by a first VNFM node, and obtaining fault information of the first VNFM node from the message; and
determining, by the NFVO node, the at least one NFVI node corresponding to the first VNFM node, and obtaining the fault information of the at least one NFVI node; and
the performing, by the NFVO node, a fault correlation analysis on the virtualized network service, the at least one VNFM node, and the at least one NFVI node according to the fault information of the at least one VNFM node and the fault information of the at least one NFVI node includes:
   determining, by the NFVO node according to the at least one NVFI node, a second VNFM node affected by the at least one NFVI node;
   obtaining, by the NFVO node, fault information of the second VNFM node; and
   performing, by the NFVO node, a fault correlation analysis according to the fault information of the first VNFM node and the fault information of the second VNFM node.

According to a third aspect, a troubleshooting apparatus with reference to network function virtualization, located on a network function virtualization orchestrator, NFVO, node, is provided, including:
an obtaining module, configured to obtain fault information of at least one virtualized network function, VNF, node that provides a virtualized network service and fault information of at least one NFVI node; and
an analysis module, configured to perform a fault correlation analysis on the virtualized network service, the at least one VNF node, and the at least one NFVI node according to the fault information of the at least one VNF node and the fault information of the at least one NFVI node that are obtained by the obtaining module.

With reference to the second aspect, in a first possible implementation manner:
the obtaining module is configured to: obtain, from the VNFM node, the fault information of the at least one VNF node, and obtain, from a VIM node, the fault information of the at least one NFVI node.

According to a fourth aspect, a troubleshooting apparatus with reference to network function virtualization, located on a network function virtualization orchestrator, NFVO, node, is provided, including:
an obtaining module, configured to obtain fault information of at least one virtualized network function manager, VNFM, node that provides a virtualized network service and fault information of at least one network function virtualization infrastructure, NFVI, node; and
an analysis module, configured to perform a fault correlation analysis on the virtualized network service, the at least one VNFM node, and the at least one NFVI node according to the fault information of the at least one VNFM node and the fault information of the at least one NFVI node that are obtained by the obtaining module.

With reference to the fourth aspect, in a first possible implementation manner:
the obtaining module is configured to:
receive a message sent by a first VNFM node, and obtain fault information of the first VNFM node from the message; and
determine the at least one NFVI node corresponding to the first VNFM node, and obtain the fault information of the at least one NFVI node; and
the analysis module is configured to:
   determine, according to the at least one NVFI node, a second VNFM node affected by the at least one NFVI node;
   obtain fault information of the second VNFM node; and
   perform a fault correlation analysis according to the fault information of the first VNFM node and the fault information of the second VNFM node.

According to a fifth aspect, a troubleshooting system based on network function virtualization is provided, including:
the troubleshooting apparatus based on network function virtualization located on a network function virtualization orchestrator, NFVO, node according to the third aspect or the fourth aspect;
anda VNF or a VNFM.

According to a sixth aspect, a server is provided, including a processor and a memory, where the processor and the memory are connected through a bus, the memory stores an instruction for implementing the troubleshooting method, according to the first aspect or the second aspect, based on network function virtualization, and the processor invokes and executes the instruction stored in the memory, to implement the troubleshooting method, according to the first aspect, based on network function virtualization.

In embodiments of the present invention, a first functional entity obtains fault information of at least one second functional entity that provides a virtualized network service and fault information of at least one NFVI; and performs a fault correlation analysis on the virtualized network service, the at least one second functional entity, and the at least one NFVI according to the fault information of the at least one second functional entity and the fault information of the at least one NFVI. Fault information of a VNF or an NFVI does not need to be reported by using an EMS, fault correlation processing time of a Network Service, the VNF, and the NFVI can be shortened, and troubleshooting efficiency is improved; in addition, service interruption time of the Network Service can also be shortened, thereby meeting a requirement of a user for troubleshooting in real time.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

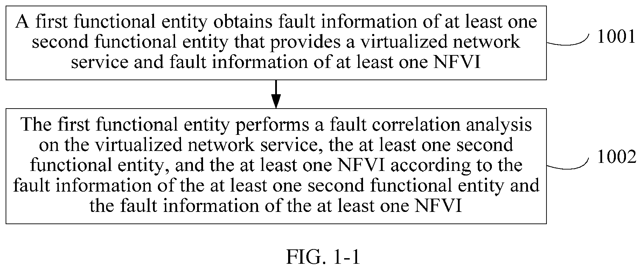

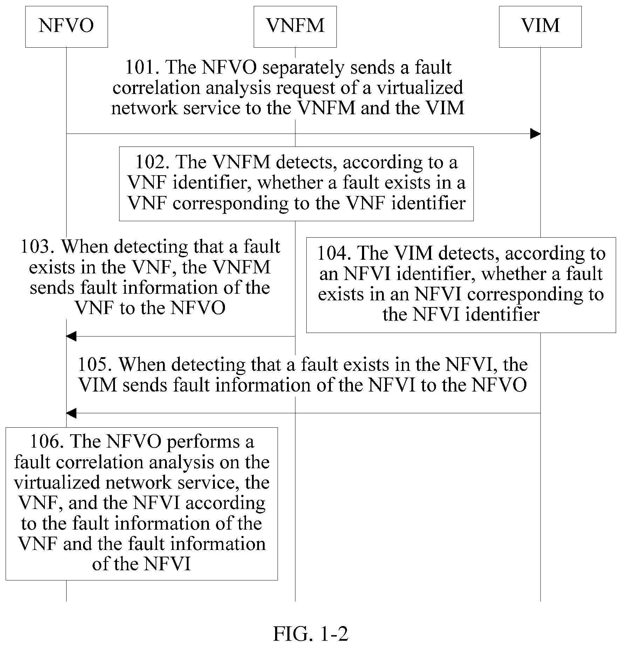

FIG. 1-1 is a schematic flowchart of a troubleshooting method based on network function virtualization according to an embodiment of the present invention;
FIG. 1-2 is a signaling diagram of a troubleshooting method based on network function virtualization according to another embodiment of the present invention;
FIG. 2 is a signaling diagram of a troubleshooting method based on network function virtualization according to another embodiment of the present invention;
FIG. 3 is a signaling diagram of a troubleshooting method based on network function virtualization according to another embodiment of the present invention;
FIG. 4 is a signaling diagram of a troubleshooting method based on network function virtualization according to another embodiment of the present invention;
FIG. 5 is a schematic structural diagram of a troubleshooting apparatus based on network function virtualization according to an embodiment of the present invention; and
FIG. 6 is a schematic structural diagram of a server according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the embodiments are applied to an NFV system. For example, the NFV system in the embodiments includes function nodes such as a network function virtualization infrastructure (NFV Infrastructure, NFVI), a virtualized infrastructure manager (Virtualized Infrastructure Manager, VIM), a virtualized network function (Virtualized Network Function, VNF), a virtualized network function manager (VNF Manager, VNFM), and a network function virtualization orchestrator (NFV Orchestrator, NFVO).

The VNF corresponds to a physical network functional entity (Physical Network Function, PNF) in a conventional non-virtualized network. A functional behavior and state of a network function is unrelated to whether it is virtualized. In the implementation, the VNF and the PNF have a same functional behavior and external interface.

The VIM is a virtualized entity configured to control and manage calculation, storage, and a network resource;
the NFVO is a virtualized entity responsible for performing network-side orchestration and management on an NFV resource, and implementing an NFV service topology on an NFV infrastructure; and
the NFVI includes a hardware resource, a virtual resource, and a virtualization layer. From the perspective of the VNF, the virtualization layer and the hardware resource look like an entity that can provide a needed virtual resource. A management and control unit of the NFVI is responsible for managing and controlling a virtual machine inside the NFVI.

The VNFM is responsible for managing a life cycle of a VNF instance.

For example, interfaces applied to the NFV system in the embodiments include:
(1) an interface VI-Ha between the virtualization layer and the hardware resource: the virtualization layer may request the hardware resource and collect related hardware resource state information by using this interface;
(2) an interface Vn-Nf between the VNF and the NFVI: it describes an execution environment provided by the NFVI for the VNF;
(3) an interface Or-Vnfm between the NFVO and the VNFM, which is an internal interface of an MANO, where the NFVO, the VNFM, and the VIM jointly form the MANO, and the interface is specifically used for:
   the VNF Manager to send a resource related request, for example, authorization, verification, reservation, and allocation of a resource, so as to manage a life cycle of the VNF;
   the NFVO to send configuration information to the VNFM, so that the VNF can be properly configured according to a VNF forwarding graph (forwarding gragh); and
   collecting state information (for example, fault information) of the VNF, so as to manage a life cycle of the VNF;
(4) an interface Vi-Vnfm between the VIM and the VNFM, which is an internal interface of the MANO, and is specifically used for:
   the VNF Manager to send a resource allocate request; and
   configuring a virtual hardware resource and exchanging state information (for example, fault information);
(5) an interface Or-Vi between the NFVO and the VIM, which is an internal interface of the NFVO, and is specifically used for:
   the NFVO to send a resource reservation request;
   the NFVO to send a resource allocate request; and
   configuring a virtual hardware resource and exchanging state information (for example, fault information);
(6) an interface Nf-Vi between the NFVI and the VIM, which is specifically used for:
   performing specific resource allocation according to the resource allocate request;
   forwarding state information of a virtual resource; and
   configuring a virtual hardware resource and exchanging state information (for example, fault information);
(7) an interface Os-Ma between an OSS/BSS and the NFVO, which is specifically used for:
   requesting to manage a life cycle of a service gragh;
   requesting to manage a life cycle of the VNF;
   forwarding NFV related state information (for example, fault information);
   exchanging policy management information;
   exchanging data analysis information;
   forwarding NFV related accounting and usage records; and
   exchanging capacity and inventory (inventory) information;
(8) an interface Ve-Vnfm between the VNF/EMS and the VNFM, which is specifically used for:
   requesting to manage a life cycle of the VNF;
   exchanging configuration information; and
   exchanging state information (for example, fault information) necessary for managing a service life cycle; and
(9) an interface Se-Ma between a Service, VNF and Infrastructure Description, and the NFVO: this interface is used for retrieving VNF forwarding graph (forwarding gragh) related information, service related information, VNF related information, and NFVI information model related information. The information is provided for the NFVO to use.

Based on the foregoing NFV system, FIG. 1-1 is a schematic flowchart of a troubleshooting method based on network function virtualization according to an embodiment of the present invention. As shown in FIG. 1-1, the method includes the following steps:
1001: A first functional entity obtains fault information of at least one second functional entity that provides a virtualized network service and fault information of at least one NFVI.

The first functional entity includes an NFVO or a VNFM.

1002: The first functional entity performs a fault correlation analysis on the virtualized network service, the at least one second functional entity, and the at least one NFVI according to the fault information of the at least one second functional entity and the fault information of the at least one NFVI.

In an optional implementation manner, when the first functional entity is the NFVO, and the second functional entity is a VNF, step 1001 includes:
obtaining, from the VNFM by the NFVO, the fault information of the at least one VNF, and obtaining, from a VIM, the fault information of the at least one NFVI.

Accordingly, step 1002 includes:
performing, by the NFVO, a fault correlation analysis on the virtualized network service, the at least one VNF, and the at least one NFVI according to the fault information of the at least one VNF and the fault information of the at least one NFVI.

In an optional implementation manner, when the first functional entity is the NFVO, and the second functional entity is a VNFM, step 1001 includes:
receiving, by the NFVO, a first message sent by a first VNFM, and obtaining fault information of the first VNFM from the first message; and
determining, by the NFVO, the at least one NFVI corresponding to the first VNFM, and obtaining the fault information of the at least one NFVI.

It should be noted that, in the NFV system, one VNFM may be installed on multiple NFVIs, and therefore, one VNFM may correspond to multiple NFVIs.

Accordingly, step 1002 includes:
determining, by the NFVO according to the at least one NVFI, a second VNFM affected by the at least one NFVI;
obtaining, by the NFVO, fault information of the second VNFM; and
performing, by the NFVO, a fault correlation analysis according to the fault information of the first VNFM and the fault information of the second VNFM.

In an optional implementation manner, when the first functional entity is the VNFM, and the second functional entity is a VNF, step 1001 includes:
receiving, by the VNFM, a second message sent by a first VNF, and obtaining fault information of the first VNF from the second message; and
obtaining, from a VIM by the VNFM, the fault information of the at least one NFVI corresponding to the first VNF.

It should be noted that, in the NFV system, one VNF may be installed on multiple NFVIs, and therefore, one VNF may correspond to multiple NFVIs.

Accordingly, step 1002 includes:
performing, by the VNFM according to the fault information of the first VNF and the fault information of the at least one NFVI corresponding to the first VNF, a fault correlation analysis on the virtualized network service, the first VNF, and the at least one NFVI corresponding to the first VNF.

In an optional implementation manner, when the first functional entity is the VNFM, and the second functional entity is a VNF, step 1001 includes:
receiving, by the VNFM, a third message sent by a first VIM, and obtaining fault information of a first NFVI from the third message; and
obtaining, by the VNFM, the fault information of the at least one VNF corresponding to the first NFVI.

It should be noted that, in the NFV system, one NFVI may be installed on multiple VNFs, and therefore, one NFVI may correspond to multiple VNFs.

Accordingly, step 1002 includes:
performing, by the VNFM according to the fault information of the at least one VNF corresponding to the first NFVI and the fault information of the first NFVI, a fault correlation analysis on the virtualized network service, the first NFVI, and the at least one VNF corresponding to the first NFVI.

In this embodiment of the present invention, a first functional entity obtains fault information of at least one second functional entity that provides a virtualized network service and fault information of at least one NFVI; and performs a fault correlation analysis on the virtualized network service, the at least one second functional entity, and the at least one NFVI according to the fault information of the at least one second functional entity and the fault information of the at least one NFVI. Fault information of a VNF or an NFVI does not need to be reported by using an EMS, fault correlation processing time of a Network Service, the VNF, and the NFVI can be shortened, and troubleshooting efficiency is improved; in addition, service interruption time of the Network Service can also be shortened, thereby meeting a requirement of a user for troubleshooting in real time.

Based on the embodiment shown in FIG. 1-1, FIG. 1-2 is a signaling diagram of a troubleshooting method based on network function virtualization according to another embodiment of the present invention. During specific implementation, the method is shown in FIG. 1-2:
101: An NFVO separately sends a fault correlation analysis request of a virtualized network service to a VNFM and a VIM.

For example, fault detection of an NFVI or a VNF is incomplete, and therefore, the VNF or the NFVI is in a subhealth or silent fault state. In this case, an end user can preferentially sense a service fault from the perspective of a network service (Network Service). In this case, the NFVO needs to be relied on to initiate a top-down fault diagnosis and correlation analysis. Specifically, the NFVO may, for example, separately send the fault correlation analysis request of the virtualized network service to the VNFM and the VIM.

The fault correlation analysis request includes a virtualized network function node VNF identifier and a network function virtualization infrastructure NFVI identifier; or the fault correlation analysis request sent to the VNFM may include only a VNF identifier, and the fault correlation analysis request sent to the VIM may include only an NFVI identifier.

102: The VNFM detects, according to the VNF identifier, whether a fault exists in a VNF corresponding to the VNF identifier.

103: When detecting that a fault exists in the VNF, the VNFM sends fault information of the VNF to the NFVO.

104: The VIM detects, according to the NFVI identifier, whether a fault exists in an NFVI corresponding to the NFVI identifier.

105: When detecting that a fault exists in the NFVI, the VIM sends fault information of the NFVI to the NFVO.

Optionally, steps 102 and 104 may be concurrently performed, and steps 103 and 105 may be concurrently performed.

106: The NFVO performs a fault correlation analysis on the virtualized network service, the VNF, and the NFVI according to the fault information of the VNF and the fault information of the NFVI.

For example, the NFVO determines, according to the fault information of the VNF and the fault information of the NFVI, whether the faults that exist in the VNF and the NFVI are caused by a fault of the virtualized network service.

In this embodiment of the present invention, an NFVO actively sends a fault correlation analysis request of a virtualized network service to a VNFM and a VIM, where the fault correlation analysis request includes a virtualized network function node VNF identifier and a network function virtualization infrastructure NFVI identifier, so that the VNFM sends the fault information of the VNF to the NFVO if detecting, according to the VNF identifier, that fault information exists in a VNF corresponding to the VNF identifier, and the VIM sends the fault information of the NFVI to the NFVO if detecting, according to the NFVI identifier, that fault information exists in an NFVI corresponding to the NFVI identifier; and the NFVO performs a fault correlation analysis on the virtualized network service, the VNF, and the NFVI according to the fault information of the VNF and the fault information of the NFVI. The fault information of the VNF or the NFVI does not need to be reported by using an EMS, fault correlation processing time of a Network Service, the VNF, and the NFVI can be shortened, and troubleshooting efficiency is improved; in addition, service interruption time of the Network Service can also be shortened, thereby meeting a requirement of a user for troubleshooting in real time.

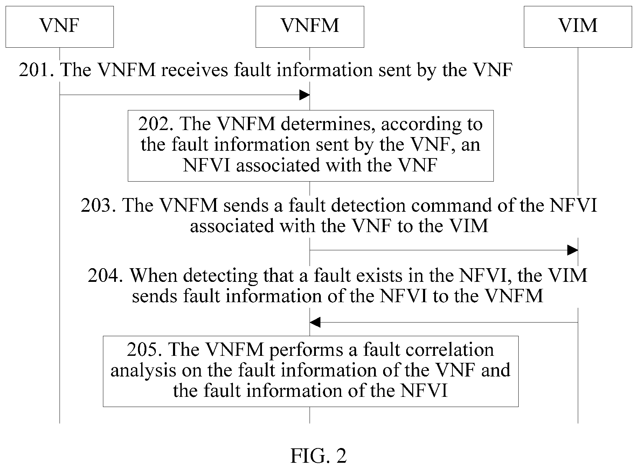

Based on the embodiment shown in FIG. 1-1, FIG. 2 is a signaling diagram of a troubleshooting method based on network function virtualization according to another embodiment of the present invention, as shown in FIG. 2:

201: A VNFM receives fault information sent by a VNF.

Specifically, when detecting that a fault exists, the VNF may send the fault information of the VNF to the VNFM.

202: The VNFM determines, according to the fault information sent by the VNF, an NFVI associated with the VNF.

Specifically, the VNFM determines, according to the VNF that reports the fault information, the NFVI used by the VNF of the fault.

203: The VNFM sends a fault detection command of the NFVI associated with the VNF to a VIM.

204: When detecting that a fault exists in the NFVI, the VIM sends fault information of the NFVI to the VNFM.

205: The VNFM performs a fault correlation analysis on the fault information of the VNF and the fault information of the NFVI.

For example, whether the fault of the VNF is caused by the fault of the NFVI is analyzed according to the fault information of the VNF and the fault information of the NFVI. A cause of the fault of the VNF is queried, and further a fault recovery action may be triggered.

In this embodiment of the present invention, according to fault information sent by a VNF, a VNFM detects, by using a VIM, whether a fault exists in an NFVI associated with the VNF; and if a fault exists in the NFVI, the VNFM performs a fault correlation analysis on the fault information of the VNF and fault information of the NFVI. The fault information of the NFVI does not need to be reported by using an EMS, fault correlation processing time of the VNF and the NFVI can be shortened, and troubleshooting efficiency is improved.

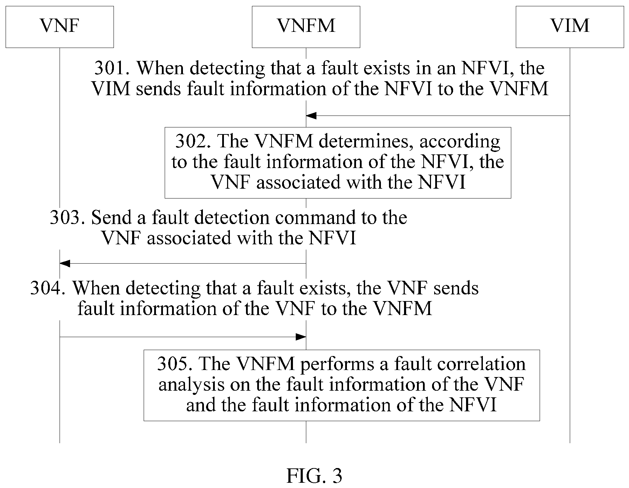

Based on the embodiment shown in FIG. 1-1, FIG. 3 is a signaling diagram of a troubleshooting method based on network function virtualization according to another embodiment of the present invention. As shown in FIG. 3, the method includes the following steps:

301: When detecting that a fault exists in an NFVI, a VIM sends fault information of the NFVI to a VNFM.

302: The VNFM determines, according to the fault information of the NFVI, a VNF associated with the NFVI.

303: Send a fault detection command to the VNF associated with the NFVI.

304: When detecting that a fault exists, the VNF sends fault information of the VNF to the VNFM.

305: The VNFM performs a fault correlation analysis on the fault information of the VNF and the fault information of the NFVI.

In this embodiment of the present invention, when detecting fault information of an NFVI by using a VIM, a VNFM detects whether a fault exists in a VNF associated with the NFVI; and if a fault exists in the VNF, the VNFM performs a fault correlation analysis on fault information of the VNF and the fault information of the NFVI. The fault information of the NFVI does not need to be reported by using an EMS, fault correlation processing time of the VNF and the NFVI can be shortened, and troubleshooting efficiency is improved.

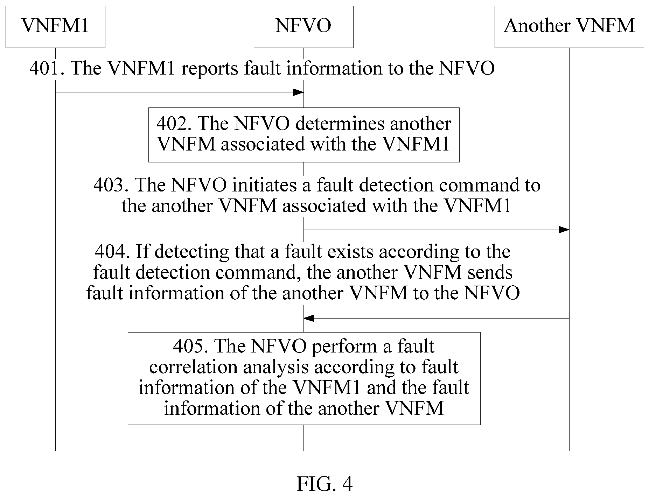

Based on the embodiment shown in FIG. 1-1, FIG. 4 is a signaling diagram of a troubleshooting method based on network function virtualization according to another embodiment of the present invention. Specific implementation is shown in FIG. 4:
401: A VNFM1 reports fault information to an NFVO.

For example, when detecting a fault, the VNFM1 may send fault information to the NFVO.

402: The NFVO determines another VNFM associated with the VNFM1.

Another VNFM, that is installed on a same NFVI on which the VNFM1 is installed, may be regarded as the another VNFM associated with the VNFM1.

Specifically, by querying the VIM, the NFVO at least determines whether a fault exists in an NFVI on which a VNFM1 is located, so as to determine whether the fault of the VNFM1 affects another VNFM associated with the VNFM1.

403: The NFVO initiates a fault detection command to the another VNFM associated with the VNFM1.

404: If detecting that a fault exists according to the fault detection command, the another VNFM sends fault information of the another VNFM to the NFVO.

405: The NFVO perform a fault correlation analysis according to fault information of the VNFM1 and the fault information of the another VNFM.

For example, when a fault exists in the VNFM1, and a fault also exists in the another VNFM associated with the VNFM1, it can be determined that a fault exists in the NFVI on which the VNFM1 is located.

For another example, when a fault exists in the VNFM1, and a fault exists in an NFVI on which the VNFM1 is located, a fault also exists in the another VNFM of the NFVI of the fault.

In this embodiment of the present invention, an NFVO detects, according to fault information of a VNFM1, whether a fault exists in another VNFM associated with the VNFM1, and if a fault exists, the NFVO performs a fault correlation analysis on the fault information of the VNFM1 and fault information of the another VNFM. Fault information of an NFVI does not need to be reported by using an EMS, fault correlation processing time of the VNFM1 and the another VNFM associated with the VNFM1 can be shortened, and troubleshooting efficiency is improved.

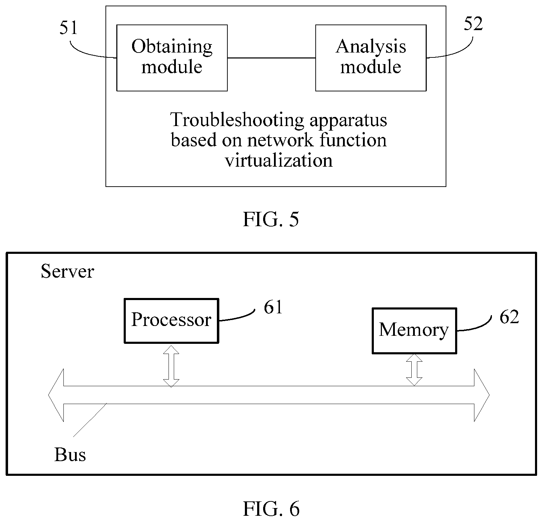

FIG. 5 is a schematic structural diagram of a troubleshooting apparatus based on network function virtualization according to an embodiment of the present invention. As shown in FIG. 5, the apparatus is located on a side of a first functional entity, and includes:
an obtaining module 51, configured to obtain fault information of at least one second functional entity that provides a virtualized network service and fault information of at least one NFVI; and
an analysis module 52, configured to perform a fault correlation analysis on the virtualized network service, the at least one second functional entity, and the at least one NFVI according to the fault information of the at least one second functional entity and the fault information of the at least one NFVI that are obtained by the obtaining module,
where the first functional entity includes an NFVO or a VNFM.

Optionally, when the first functional entity is the NFVO, and the second functional entity is a VNF, the obtaining module 51 is specifically configured to:
obtain, from the VNFM, the fault information of the at least one VNF, and obtain, from a VIM, the fault information of the at least one NFVI; and
the analysis module 52 is specifically configured to:
   perform a fault correlation analysis on the virtualized network service, the at least one VNF, and the at least one NFVI according to the fault information of the at least one VNF and the fault information of the at least one NFVI.

Optionally, when the first functional entity is the NFVO, and the second functional entity is a VNFM, the obtaining module 51 is specifically configured to:
receive a first message sent by a first VNFM, and obtain fault information of the first VNFM from the first message; and
determine the at least one NFVI corresponding to the first VNFM, and obtain the fault information of the at least one NFVI; and
the analysis module 52 is specifically configured to:
   determine, according to the at least one NVFI, a second VNFM affected by the at least one NFVI;
   obtain fault information of the second VNFM; and
   perform a fault correlation analysis according to the fault information of the first VNFM and the fault information of the second VNFM.

Optionally, when the first functional entity is the VNFM, and the second functional entity is a VNF, the obtaining module 51 is specifically configured to:
receive a second message sent by a first VNF, and obtain fault information of the first VNF from the second message; and
obtain, from a VIM, the fault information of the at least one NFVI corresponding to the first VNF; and
the analysis module 52 is specifically configured to:
   perform, according to the fault information of the first VNF and the fault information of the at least one NFVI corresponding to the first VNF, a fault correlation analysis on the virtualized network service, the first VNF, and the at least one NFVI corresponding to the first VNF.

Optionally, when the first functional entity is the VNFM, and the second functional entity is a VNF, the obtaining module 51 is specifically configured to:
receive a third message sent by a first VIM, and obtain fault information of a first NFVI from the third message; and
obtain the fault information of the at least one VNF corresponding to the first NFVI; and
the analysis module 52 is specifically configured to:
   perform, according to the fault information of the at least one VNF corresponding to the first NFVI and the fault information of the first NFVI, a fault correlation analysis on the virtualized network service, the first NFVI, and the at least one VNF corresponding to the first NFVI.

For a technical principle and a technical effect of the apparatus in this embodiment of the present invention, reference may be made to related description in the embodiments that are shown in FIG. 1-1 to FIG. 4, and details are not described again.

An embodiment of the present invention further provides a troubleshooting system based on network function virtualization, including: a first functional entity and a second functional entity,
where the first functional entity includes the troubleshooting apparatus based on network function virtualization in the embodiment shown in FIG. 5, and may specifically be, for example, an NFVO or a VNFM; and
the second functional entity includes, for example, a VNF or a VNFM.

For a technical principle and a technical effect of the system in this embodiment of the present invention, reference may be made to related description in the embodiments that are shown in FIG. 1-1 to FIG. 4, and details are not described again.

FIG. 6 is a schematic structural diagram of a server according to an embodiment of the present invention. As shown in FIG. 6, the server includes a processor 61 and a memory 62, where the processor and the memory are connected through a bus, where the memory stores an instruction for implementing the foregoing troubleshooting method based on network function virtualization, and the processor invokes and executes the instruction stored in the memory, to implement the foregoing troubleshooting method based on network function virtualization.

For a technical principle and a technical effect of the server in this embodiment of the present invention, reference may be made to related description in the embodiments that are shown in FIG. 1-1 to FIG. 4, and details are not described again.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

The foregoing integrated unit implemented in a form of a software functional unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a removable hard disk, a read-only memory (Read-Only Memory in English, ROM for short), a random access memory (Random Access Memory in English, RAM for short), a magnetic disk, or an optical disc.

## Claims

1. A troubleshooting method based on network function virtualization, comprising:
obtaining, by a network function virtualization orchestrator, NFVO, node , fault information of at least one virtualized network function, VNF, node that provides a virtualized network service and fault information of at least one network function virtualization infrastructure, NFVI, node; and
performing, by the NFVO node, a fault correlation analysis on the virtualized network service, the at least one VNF node, and the at least one NFVI node according to the fault information of the at least one VNF node and the fault information of the at least one NFVI node.

2. The method according to claim 1, wherein: the obtaining, by a NFVO node, fault information of at least one VNF node that provides a virtualized network service and fault information of at least one NFVI node comprises:
obtaining, from a virtualized network function manager, VNFM, node by the NFVO node, the fault information of the at least one VNF node, and obtaining, from a virtualized infrastructure manager, VIM, node, the fault information of the at least one NFVI node.

3. A troubleshooting method based on network function virtualization, comprising:
obtaining, by a network function virtualization orchestrator, NFVO, node , fault information of at least one virtualized network function manager, VNFM, node that provides a virtualized network service and fault information of at least one network function virtualization infrastructure, NFVI, node; and
performing, by the NFVO node, a fault correlation analysis on the virtualized network service, the at least one VNFM node, and the at least one NFVI node according to the fault information of the at least one VNFM node and the fault information of the at least one NFVI node.

4. The method according to claim 3, wherein:
the obtaining, by a NFVO node, fault information of at least one VNFM node that provides a virtualized network service and fault information of at least one NFVI node comprises:
receiving, by the NFVO node, a message sent by a first VNFM node, and obtaining fault information of the first VNFM node from the message; and
determining, by the NFVO node, the at least one NFVI node corresponding to the first VNFM node, and obtaining the fault information of the at least one NFVI node; and
the performing, by the NFVO node, a fault correlation analysis on the virtualized network service, the at least one VNFM node, and the at least one NFVI node according to the fault information of the at least one VNFM node and the fault information of the at least one NFVI node comprises:
determining, by the NFVO node according to the at least one NVFI node, a second VNFM node affected by the at least one NFVI node;
obtaining, by the NFVO node, fault information of the second VNFM node; and
performing, by the NFVO node, a fault correlation analysis according to the fault information of the first VNFM node and the fault information of the second VNFM node.

5. A troubleshooting apparatus based on network function virtualization, located on a network function virtualization orchestrator, NFVO, node, comprising:
an obtaining module, configured to obtain fault information of at least one virtualized network function, VNF, node that provides a virtualized network service and fault information of at least one network function virtualization infrastructure, NFVI, node; and
an analysis module, configured to perform a fault correlation analysis on the virtualized network service, the at least one VNF node, and the at least one NFVI node according to the fault information of the at least one VNF node and the fault information of the at least one NFVI node that are obtained by the obtaining module.

6. The apparatus according to claim 5, wherein:
the obtaining module is configured to: obtain, from a virtualized network function manager, VNFM, node, the fault information of the at least one VNF node, and obtain, from a virtualized infrastructure manager ,VIM, node, the fault information of the at least one NFVI node.

7. A troubleshooting apparatus based on network function virtualization, located on a network function virtualization orchestrator, NFVO, node, comprising:
an obtaining module, configured to obtain fault information of at least one virtualized network function manager, VNFM, node that provides a virtualized network service and fault information of at least one network function virtualization infrastructure, NFVI, node; and
an analysis module, configured to perform a fault correlation analysis on the virtualized network service, the at least one VNFM node, and the at least one NFVI node according to the fault information of the at least one VNFM node and the fault information of the at least one NFVI node that are obtained by the obtaining module.

8. The apparatus according to claim 7, wherein:
the obtaining module is configured to:
receive a message sent by a first VNFM node, and obtain fault information of the first VNFM node from the message; and
determine the at least one NFVI node corresponding to the first VNFM node, and obtain the fault information of the at least one NFVI node; and
the analysis module is configured to:
determine, according to the at least one NVFI node, a second VNFM node affected by the at least one NFVI node;
obtain fault information of the second VNFM node; and
perform a fault correlation analysis according to the fault information of the first VNFM node and the fault information of the second VNFM node.

9. A troubleshooting system based on network function virtualization, comprising:
the troubleshooting apparatus based on network function virtualization located on a network function virtualization orchestrator, NFVO, node according to any one of claims 5 to 8;
and
a virtualized network function VNF or a virtualized network function manager, VNFM.

10. A server, comprising a processor and a memory, wherein the processor and the memory are connected through a bus, wherein:
the memory stores an instruction for implementing the troubleshooting method, according to any one of claims 1 to 4, based on network function virtualization, and the processor invokes and executes the instruction stored in the memory, to implement the troubleshooting method, according to any one of claims 1 to 4, based on network function virtualization.

## Patentansprüche

1. Problembehandlungsverfahren, basierend auf Netzwerkfunktionsvirtualisierung, aufweisend:
Erhalten, durch einen Netzwerkfunktionsvirtualisierungsorchestrierer-, NFVO, Knoten, von Fehlerinformationen mindestens eines virtualisierten Netzwerkfunktion-, VNF, Knotens, der einen virtualisierten Netzwerkdienst und Fehlerinformationen mindestens eines Netzwerkfunktionsvirtualisierungsinfrastruktur-, NFVI, Knotens bereitstellt; und
Ausführen, durch den NFVO-Knoten, einer Fehlerkorrelationsanalyse an dem virtualisierten Netzwerkdienst, dem mindestens einen VNF-Knoten und dem mindestens einen NFVI-Knoten gemäß den Fehlerinformationen des mindestens einen VNF-Knotens und den Fehlerinformationen des mindestens einen NFVI-Knotens.

2. Verfahren nach Anspruch 1, wobei: das Erhalten, durch einen NFVO-Knoten, von Fehlerinformationen mindestens eines VNF-Knotens, der einen virtualisierten Netzwerkdienst bereitstellt, und von Fehlerinformationen mindestens eines NFVI-Knotens aufweist:
Erhalten, von einem virtualisierten Netzwerkfunktionsverwalter-, VNFM (Virtualized Network Function Manager), Knoten durch den NFVO-Knoten, der Fehlerinformationen des mindestens einen VNF-Knotens, und Erhalten, von einem virtualisierten Infrastrukturverwalter-, VIM (Virtualized Infrastructure Manager), Knoten, der Fehlerinformationen des mindestens einen NFVI-Knotens.

3. Problemlösungsverfahren, basierend auf Netzwerkfunktionsvirtualisierung, aufweisend:
Erhalten, durch einen Netzwerkfunktionsvirtualisierungsorchestrierer-, NFVO, Knoten, von Fehlerinformationen mindestens eines virtualisierten Netzwerkfunktionsverwalter-, VNFM, Knotens, der einen virtualisierten Netzwerkdienst bereitstellt, und von Fehlerinformationen mindestens eines Netzwerkfunktionsvirtualisierungsinfrastruktur-, NFVI, Knotens; und
Ausführen, durch den NFVO-Knoten, einer Fehlerkorrelationsanalyse an dem virtualisierten Netzwerkdienst, dem mindestens einen VNFM-Knoten und dem mindestens einen NFVI-Knoten gemäß den Fehlerinformationen des mindestens einen VNFM-Knotens und den Fehlerinformationen des mindestens einen NFVI-Knotens.

4. Verfahren nach Anspruch 3, wobei:
das Erhalten, durch einen NFVO-Knoten, von Fehlerinformationen mindestens eines VNFM-Knotens, der einen virtualisierten Netzwerkdienst bereitstellt, und von Fehlerinformationen mindestens eines NFVI-Knotens aufweist:
Empfangen, durch den NFVO-Knoten, einer Nachricht, die von einem ersten VNFM-Knoten gesendet wird, und Erhalten von Fehlerinformationen des ersten VNFM-Knotens von der ersten Nachricht; und
Ermitteln, durch den NFVO-Knoten, des mindestens einen NFVI-Knotens, entsprechend dem ersten VNFM-Knoten, und Erhalten der Fehlerinformationen des mindestens einen NFVI-Knotens; und
das Ausführen, durch den NFVO-Knoten, einer Fehlerkorrelationsanalyse an dem virtualisierten Netzwerkdienst, dem mindestens einen VNFM-Knoten und dem mindestens einen NFVI-Knoten gemäß den Fehlerinformationen des mindestens einen VNFM-Knotens und den Fehlerinformationen des mindestens einen NFVI-Knotens aufweist:
Ermitteln, durch den NFVO-Knoten gemäß dem mindestens einen NVFI-Knoten, eines zweiten VNFM-Knotens, der von dem mindestens einen NFVI-Knoten beeinträchtigt wird;
Erhalten, durch den NFVO-Knoten, von Fehlerinformationen des zweiten VNFM-Knotens; und
Ausführen, durch den NFVO-Knoten, einer Fehlerkorrelationsanalyse gemäß den Fehlerinformationen des ersten VNFM-Knotens und den Fehlerinformationen des zweiten VNFM-Knotens.

5. Problemlösungsvorrichtung, basierend auf Netzwerkfunktionsvirtualisierung, die auf einem Netzwerkfunktionsvirtualisierungsorchestrierer-, NFVO, Knoten liegt, aufweisend:
ein Erhaltungsmodul, das konfiguriert ist, Fehlerinformationen mindestens eines virtualisierten Netzwerkfunktion-, VNF, Knotens, der einen virtualisierten Netzwerkdienst bereitstellt, und Fehlerinformationen mindestens eines Netzwerkfunktionsvirtualisierungsinfrastruktur-, NFVI, Knotens zu erhalten; und
ein Analysemodul, das konfiguriert ist, eine Fehlerkorrelationsanalyse am virtualisierten Netzwerkdienst, dem mindestens einen VNF-Knoten und dem mindestens einen NFVI-Knoten gemäß den Fehlerinformationen des mindestens einen VNF-Knotens und den Fehlerinformationen des mindestens einen NFVI-Knotens, die vom Erhaltungsmodul erhalten werden, auszuführen.

6. Vorrichtung nach Anspruch 5, wobei:
das Erhaltungsmodul konfiguriert ist zum:
Erhalten, von einem virtualisierten Netzwerkfunktionsverwalter-, VNFM, Knoten der Fehlerinformationen des mindestens einen VNF-Knotens, und Erhalten, von einem virtualisierten Infrastrukturverwalter-, VIM, Knoten, der Fehlerinformationen des mindestens einen NFVI-Knotens.

7. Problemlösungsvorrichtung, basierend auf Netzwerkfunktionsvirtualisierung, die auf einem Netzwerkfunktionsvirtualisierungsorchestrierer-, NFVO, Knoten liegt, aufweisend:
ein Erhaltungsmodul, das konfiguriert ist, Fehlerinformationen mindestens eines virtualisierten Netzwerkfunktionsverwalter-, VNFM, Knotens, der einen virtualisierten Netzwerkdienst bereitstellt, und Fehlerinformationen mindestens eines Netzwerkfunktionsvirtualisierungsinfrastruktur-, NFVI, Knotens zu erhalten; und
ein Analysemodul, das konfiguriert ist, eine Fehlerkorrelationsanalyse an dem virtualisierten Netzwerkdienst, dem mindestens einen VNFM-Knoten und dem mindestens einen NFVI-Knoten gemäß den Fehlerinformationen des mindestens einen VNFM-Knotens und den Fehlerinformationen des mindestens einen NFVI-Knotens, die vom Erhaltungsmodul erhalten werden, auszuführen.

8. Vorrichtung nach Anspruch 7, wobei:
das Erhaltungsmodul konfiguriert ist zum:
Empfangen einer Nachricht, die von einem ersten VNFM-Knoten gesendet wird, und Erhalten von Fehlerinformationen des ersten VNFM-Knotens von der Nachricht; und Ermitteln des mindestens einen NFVI-Knotens entsprechend dem ersten VNFM-Knoten und Erhalten der Fehlerinformationen des mindestens einen NFVI-Knotens; und
das Analysemodul konfiguriert ist zum:
Ermitteln, gemäß dem mindestens einen NVFI-Knoten, eines zweiten VNFM-Knotens, der durch den mindestens einen NFVI-Knoten beeinträchtigt wird;
Erhalten von Fehlerinformationen des zweiten VNFM-Knotens; und
Ausführen einer Fehlerkorrelationsanalyse gemäß den Fehlerinformationen des ersten VNFM-Knotens und den Fehlerinformationen des zweiten VNFM-Knotens.

9. Problemlösungssystem, basierend auf Netzwerkfunktionsvirtualisierung, aufweisend:
die Problemlösungsvorrichtung, basierend auf Netzwerkfunktionsvirtualisierung, die auf einem Netzwerkfunktionsvirtualisierungsorchestrierer-, NFVO, Knoten nach einem der Ansprüche 5 bis 8 liegt; und
eine virtualisierte Netzwerkfunktion VNF oder einen virtualisierten Netzwerkfunktionsverwalter, VNFM.

10. Server, aufweisend einen Prozessor und einen Speicher, wobei der Prozessor und der Speicher durch einen Bus verbunden sind, wobei:
der Speicher einen Befehl zum Implementieren des Problemlösungsverfahrens, nach einem der Ansprüche 1 bis 4, basierend auf Netzwerkfunktionsvirtualisierung, speichert und der Prozessor den im Speicher gespeicherten Befehl aufruft und durchführt, um das Problemlösungsverfahren nach einem der Ansprüche 1 bis 4, basierend auf Netzwerkfunktionsvirtualisierung zu implementieren.

## Revendications

1. Procédé de dépannage basé sur une virtualisation de fonctions de réseau, consistant à :
obtenir, par un nœud orchestrateur de virtualisation de fonctions de réseau (NFVO), une information d'anomalie d'au moins un nœud de fonction de réseau virtualisée (VNF) qui fournit un service de réseau virtualisé et une information d'anomalie d'au moins un nœud d'infrastructure de virtualisation de fonctions de réseau (NFVI) ; et
réaliser, par le nœud NFVO, une analyse de corrélation d'anomalie sur le service de réseau virtualisé, l'au moins un nœud VNF et l'au moins un nœud NFVI selon l'information d'anomalie de l'au moins un nœud VNF et l'information d'anomalie de l'au moins un nœud NFVI.

2. Procédé selon la revendication 1, dans lequel : l'obtention, par le nœud NFVO, d'une information d'anomalie d'au moins un nœud VNF qui fournit un service de réseau virtualisé et d'une information d'anomalie d'au moins un nœud NFVI, consiste à :
obtenir, d'un nœud gestionnaire de fonctions de réseau virtualisées (VNFM), par le nœud NFVO, l'information d'anomalie de l'au moins un nœud VNF, et obtenir, d'un nœud gestionnaire d'infrastructure virtualisée (VIM), l'information d'anomalie de l'au moins un nœud NFVI.

3. Procédé de dépannage basé sur une virtualisation de fonctions de réseau, consistant à :
obtenir, par un nœud orchestrateur de virtualisation de fonctions de réseau (NFVO), une information d'anomalie d'au moins un nœud gestionnaire de fonctions de réseau virtualisées (VNFM) qui fournit un service de réseau virtualisé et une information d'anomalie d'au moins un nœud d'infrastructure de virtualisation de fonctions de réseau (NFVI) ; et
réaliser, par le nœud NFVO, une analyse de corrélation d'anomalie sur le service de réseau virtualisé, l'au moins un nœud VNFM et l'au moins un nœud NFVI selon l'information d'anomalie de l'au moins un nœud VNFM et l'information d'anomalie de l'au moins un nœud NFVI.

4. Procédé selon la revendication 3, dans lequel :
l'obtention, par le nœud NFVO, d'une information d'anomalie d'au moins un nœud VNFM qui fournit un service de réseau virtualisé et d'une information d'anomalie d'au moins un nœud NFVI, consiste à :
recevoir, par le nœud NFVO, un message envoyé par un premier nœud VNFM, et obtenir une information d'anomalie du premier nœud VNFM à partir du message ; et
déterminer, par le nœud NFVO, l'au moins un nœud NFVI correspondant au premier nœud VNFM, et obtenir l'information d'anomalie de l'au moins un nœud NFVI ; et
la réalisation, par le nœud NFVO, d'une analyse de corrélation d'anomalie sur le service de réseau virtualisé, l'au moins un nœud VNFM et l'au moins un nœud NFVI selon l'information d'anomalie de l'au moins un nœud VNFM et l'information d'anomalie de l'au moins un nœud NFVI, consiste à :
déterminer, par le nœud NFVO selon l'au moins un nœud NFVI, un second nœud VNFM visé par l'au moins un nœud NFVI ;
obtenir, par le nœud NFVO, une information d'anomalie du second nœud VNFM ; et
réaliser, par le nœud NFVO, une analyse de corrélation d'anomalie selon l'information d'anomalie du premier nœud VNFM et l'information d'anomalie du second nœud VNFM.

5. Appareil de dépannage basé sur une virtualisation de fonctions de réseau et situé sur un nœud orchestrateur de virtualisation de fonctions de réseau (NFVO), comprenant :
un module d'obtention, configuré pour obtenir une information d'anomalie d'au moins un nœud de fonction de réseau virtualisée (VNF) qui fournit un service de réseau virtualisé et une information d'anomalie d'au moins un nœud d'infrastructure de virtualisation de fonctions de réseau (NFVI) ; et
un module d'analyse, configuré pour réaliser une analyse de corrélation d'anomalie sur le service de réseau virtualisé, l'au moins un nœud VNFM et l'au moins un nœud NFVI selon l'information d'anomalie de l'au moins un nœud VNF et l'information d'anomalie de l'au moins un nœud NFVI qui sont obtenues par le module d'obtention.

6. Appareil selon la revendication 5, dans lequel :
le module d'obtention est configuré pour :
obtenir, d'un nœud gestionnaire de fonctions de réseau virtualisées (VNFM), l'information d'anomalie de l'au moins un nœud VNF, et obtenir, d'un nœud gestionnaire d'infrastructure virtualisée (VIM), l'information d'anomalie de l'au moins un nœud NFVI.

7. Appareil de dépannage basé sur une virtualisation de fonctions de réseau et situé sur un nœud orchestrateur de virtualisation de fonctions de réseau (NFVO), comprenant :
un module d'obtention, configuré pour obtenir une information d'anomalie d'au moins un nœud gestionnaire de fonctions de réseau virtualisées (VNFM) qui fournit un service de réseau virtualisé et une information d'anomalie d'au moins un nœud d'infrastructure de virtualisation de fonctions de réseau (NFVI) ; et
un module d'analyse, configuré pour réaliser une analyse de corrélation d'anomalie sur le service de réseau virtualisé, l'au moins un nœud VNFM et l'au moins un nœud NFVI selon l'information d'anomalie de l'au moins un nœud VNFM et l'information d'anomalie de l'au moins un nœud NFVI qui sont obtenues par le module d'obtention.

8. Appareil selon la revendication 7, dans lequel :
le module d'obtention est configuré pour :
recevoir un message envoyé par un premier nœud VNFM, et obtenir une information d'anomalie du premier nœud VNFM à partir du message ; et
déterminer l'au moins un nœud NFVI correspondant au premier nœud VNFM, et obtenir l'information d'anomalie de l'au moins un nœud NFVI ; et
le module d'analyse est configuré pour :
déterminer, selon l'au moins un nœud NFVI, un second nœud VNFM visé par l'au moins un nœud NFVI ;
obtenir une information d'anomalie du second nœud VNFM ; et
réaliser une analyse de corrélation d'anomalie selon l'information d'anomalie du premier nœud VNFM et l'information d'anomalie du second nœud VNFM.

9. Système de dépannage basé sur une virtualisation de fonctions de réseau, comprenant :
l'appareil de dépannage basé sur une virtualisation de fonctions de réseau et situé sur un nœud orchestrateur de virtualisation de fonctions de réseau (NFVO), selon l'une quelconque des revendications 5 à 8 ; et
une fonction de réseau virtualisée (VNF) ou un gestionnaire de fonctions de réseau virtualisées (VNFM).

10. Serveur, comprenant un processeur et une mémoire, le processeur et la mémoire étant connectés par l'intermédiaire d'un bus, et dans lequel :
la mémoire stocke une instruction pour mettre en œuvre le procédé de dépannage, selon l'une quelconque des revendications 1 à 4, basé sur une virtualisation de fonctions de réseau, et le processeur appelle et exécute l'instruction stockée dans la mémoire pour mettre en œuvre le procédé, selon l'une quelconque des revendications 1 à 4, basé sur une virtualisation de fonctions de réseau.
